**Europäisches Patentamt**

**European Patent Office**

**Office européen des brevets**

(11) Veröffentlichungsnummer: **0 037 918**
**A2**

## (12) EUROPÄISCHE PATENTANMELDUNG

(21) Anmeldenummer: 81102054.4

(22) Anmeldetag: 19.03.81

(51) Int. Cl.³: **B 23 K 9/20**

(30) Priorität: 15.04.80 DE 3014429

(43) Veröffentlichungstag der Anmeldung: 21.10.81
Patentblatt 81/42

(84) Benannte Vertragsstaaten: **IT NL SE**

(71) Anmelder: **Nixdorf Computer Aktiengesellschaft, Fürstenallee 7, D-4790 Paderborn (DE)**

(72) Erfinder: **Fricke, Fritz, Dr.-Dipl.-Ing., Hermann-Löns-Strasse 9, D-3030 Walsrode (DE)**

(74) Vertreter: **Patentanwälte Schaumburg, Schulz-Dörlam & Thoenes, Mauerkircherstrasse 31, D-8000 München 80 (DE)**

(54) **Bolzenschweissvorrichtung.**

(57) Bolzenschweißvorrichtung, mit einem auf einem Grundgestell (10) in zwei zueinander senkrechten Richtungen verstellbaren Werkstückaufnahmetisch (12) und einem oder mehreren an grundgestellfesten Trägeranordnungen (14) relativ zum Werkstückaufnahmetisch (12) verstellbaren Schweißköpfen (44) mit jeweils einer Vorrichtung zur Aufnahme und elektrisch leitenden Halterung eines jeweils anzuschweißenden Bolzens (48) und einer mit dem Schweißkopf (44) leitend verbindbare Schweißstromquelle.

Der Werkstückaufnahmetisch (12) ist mittels numerisch gesteuerter Stellantriebe (30; 32) relativ zum Schweißkopf (44) verstellbar, und die Schweißparameter der Schweißstromquelle sind numerisch einstellbar.

Der Schweißkopf (44) ist an einer Halterung (38) verstellbar geführt, die ihrerseits an einem grundgestellfesten Trägerarm (34; 36) der Trägeranordnung (14) senkrecht zum Werkstückaufnahmetisch (12) manuell oder numerisch gesteuert linear und drehbar verstellbar ist.

Die Datenein- und -ausgabeeinheit (70) der numerischen Steuerung ist mittels eines Tragarmes (72) an dem Grundgestell (10) verstellbar gelagert und enthält ein Bedienungspult (70) mit einem Datensichtgerät (84) und einem Tastenfeld (86).

Bolzenschweißvorrichtung

Die Erfindung betrifft eine Bolzenschweißvorrichtung, umfassend ein Grundgestell, einen auf dem Grundgesteil in zwei zueinander senkrechten Richtungen verstellbaren Werkstückaufnahmetisch, einen an einer grundgestellfesten Trägeranordnung relativ zum Werkstückaufnahmetisch verstellbaren Schweißkopf mit einer Vorrichtung zur Aufnahme und elektrisch leitenden Halterung des jeweils anzuschweißenden Bolzens und eine mit dem Schweißkopf leitend verbindbare Schweißstromquelle zur Zufuhr eines Schweißstromes zum Schweißkopf.

Bei bekannten Bolzenschweißvorrichtungen der vorstehend genannten Art werden die Betriebsparameter von Hand eingestellt. Das Aufschweißen einer größeren Anzahl von Bolzen auf ein Werkstück und insbesondere das Einrichten der Bolzenschweißvorrichtung für andere Bolzenarten oder für Werkstücke mit anderen Bolzenpositionen ist daher relativ zeitaufwendig.

Der Erfindung liegt die Aufgabe zugrunde, eine Bolzenschweißvorrichtung der eingangs genannten Art anzugeben, die bei gleicher Präzision und Funktionssicherheit eine höhere Arbeitsgeschwindigkeit und insbesondere eine schnellere Umstellung auf andere Bolzenarten und andere Werkstücke ermöglicht.

Diese Aufgabe wird erfindungsgemäß dadurch gelöst, daß mindestens ein Teil der Betriebsparameter und/oder Arbeitsschritte der Bolzenschweißvorrichtung numerisch gesteuert ist. Die betreffenden Betriebsparameter brauchen nun also nicht mehr von Hand eingestellt zu werden. Eine Änderung des Betriebsablaufs kann durch eine Änderung des entsprechenden Steuerprogramms erreicht werden. Dadurch kann die Bolzenschweißvorrichtung nicht nur bei einem gegebenen Betriebsablauf rascher arbeiten, sondern auch vielseitig eingesetzt werden.

Die Vorzüge der erfindungsgemäßen Lösung zeigen sich insbesondere bei einer Ausführungsform der Bolzenschweißvorrichtung, bei der gemäß der Erfindung der Werkstückaufnahmetisch mittels numerisch gesteuerter Stellantriebe relativ zum Schweißkopf verstellbar ist. Bei den bisher bekannten Bolzenschweißvorrichtungen erfolgt die Verstellung des Werkstückaufnahmetisches von Hand. Um dabei eine genaue Positionierung des Werkstückaufnahmetisches und damit auch des Werkstückes relativ zum Schweißkopf zu ermöglichen, ist eine Indexplatte erforderlich, die entsprechend der Position der aufzuschweißenden Bolzen Bohrungen aufweist, in welche ein Indexstift einrasten kann, wenn die Position für den jeweils aufzuschweißenden Bolzen genau erreicht ist. Damit die Bedienungsperson die verschiedenen Bohrungen der Indexplatte mit dem Indexstift in Flucht bringen kann, ist ein Abbild der Bohrungen der Indexplatte erforderlich, auf dem beispielsweise die Lage der Indexplatte und damit des Werkstückaufnahmetisches relativ zum Indexstift durch einen beweglichen Lichtpunkt angezeigt wird. Die Bedienungsperson verstellt den Werkstückaufnahmetisch solange, bis der Lichtpunkt mit einem Punkt auf dem Abbild zur Deckung kommt.

Für jedes Werkstück müssen entsprechend den Positionen der Bolzen an diesem Werkstück eine eigene Indexplatte und ein eigenes Lochbild für diese Indexplatte angefertigt werden. Bei einem Wechsel der Werkstücke müssen die Indexplatte und das Lochbild ausgetauscht werden. Diese teuren und zeitaufwendigen Maßnahmen können durch die erfindungsgemäße Lösung eingespart werden. Anstelle einer neuen Indexplatte braucht lediglich ein anderes Programm in die Steuerung eingegeben zu werden, wenn ein Werkstück mit anderen Bolzenpositionen bearbeitet werden soll. Die Bolzenschweißvorrichtung kann dann sofort wieder mit der größtmöglichen Arbeitsgeschwindigkeit betrieben werden, während bei den herkömmlichen Maschinen eine gewisse Umstellzeit für die Bedienungsperson erforderlich ist, bis sie sich auf das neue Lochbild eingestellt hat.

Vorzugsweise sind auch die Schweißparameter der Schweißstromquelle durch die Steuerung numerisch einstellbar. Damit kann je nach Stärke und Material der Bolzen und des Werkstückes die Stromstärke des Schweißstromes und die Schweißzeit rasch verändert werden. Ist das Steuerprogramm für die Steuerung einmal eingerichtet, so sind Einstellfehler praktisch ausgeschlossen.

Die Vorteile des letztgenannten Erfindungsvorschlages zeigen sich insbesondere bei einer Bolzenschweißvorrichtung, bei der an der Trägeranordnung eine Mehrzahl von Schweißköpfen verstellbar geführt ist. Die Schweißköpfe können dabei unabhängig voneinander verstellbar und mit der Schweißstromquelle verbunden sein. Beispielsweise kann jeder Schweißkopf mit einem eigenen Bolzenvorratsbehälter und einer ggf. numerisch gesteuerten Bolzenzufuhreinrichtung verbunden sein. Diese Ausführungsform ermöglicht es, beispielsweise an demselben Werkstück verschiedenartige Bolzen in ein- und demselben Arbeitsgang anzuschweißen, indem in jeder eingestellten Position der Schweißkopf mit dem für diese Position vorgesehenen Bolzen zur Wirkung gebracht wird. Da die Schweißparameter der Schweißstromquelle numerisch gesteuert sind, können sie durch ein Steuerprogramm vorgegeben werden, so daß unterschiedliche Bolzen ebenso rasch und fehlerfrei nacheinander angeschweißt werden können, wie eine Vielzahl gleichartiger Bolzen.

Entsprechend der Länge der aufzuschweißenden Bolzen ist eine Voreinstellung des Schweißkopfes relativ zur Werkstückoberfläche erforderlich. Zu diesem Zweck ist der Schweißkopf an einer Halterung verstellbar geführt, die ihrerseits an einem grundgestellfesten Trägerarm der Trägeranordnung senkrecht zum Werkstückaufnahmetisch verstellbar ist. Die Halterung wiederum kann an dem Trägerarm mittels einer manuell betätigbaren Stellvorrichtung, vorzugsweise jedoch mittels eines numerisch gesteuerten Stellantriebes verstellbar sein. Der Schweißkopf selbst wird an der Halterung in bekannter Weise pneumatisch oder durch eine Federanordnung verstellt.

Um auch Bolzen an Flächen anschweißen zu können, die nicht parallel zur Oberfläche des Werkstückaufnahmetisches liegen, wird erfindungsgemäß vorgeschlagen, daß die Halterung einen mit dem Trägerarm verbundenen ersten und einen den Schweißkopf tragenden zweiten Teil aufweist und daß der zweite Teil an dem ersten Teil um eine senkrecht zur Verstellrichtung des Schweißkopfes gerichtete Achse drehbar gelagert ist. Wenn die Lage des Schweißkopfes für ein bestimmtes Werkstück festliegt, genügt es, wenn Mittel zum Arretieren des zweiten Teiles in einer eingestellten Drehstellung desselben relativ zum ersten Teil vorgesehen sind.

Solche Mittel können beispielsweise von einer Rastvorrichtung gebildet sein, welche bestimmte Drehstellungen des zweiten Teiles relativ zum ersten Teil der Halterung festlegt. Es ist jedoch auch hier möglich, einen numerisch gesteuerten Stellantrieb vorzusehen, so daß der zweite Teil der Halterung zusammen mit dem Schweißkopf betriebsmäßig rasch und präzise verstellt werden kann.

Zur numerischen Steuerung der Stellantriebe und/oder der Schweißstromparameter kann eine Steuereinheit vorgesehen sein, die beispielsweise eine elektronische Datenverarbeitungseinheit und eine mit dieser verbundene Datenein- und -ausgabeeinheit umfaßt. Über die Datenein- und -ausgabeeinheit können die Steuerprogramme eingegeben werden, die dann in der Datenverarbeitungseinheit gespeichert und verarbeitet werden. Ist die Datenverarbeitungseinheit auf diese Weise für eine bestimmte Gruppe von Schweißvorgängen programmiert, so braucht bei Beginn der Arbeit nur noch eine bestimmte Programmnummer und/oder Werkstücknummer eingegeben zu werden, um die Maschine auf das betreffende Werkstück einzustellen und/oder die bestimmte Betriebsart zu wählen. Dabei können gleichzeitig noch andere Daten mitverarbeitet werden, wie beispielsweise die Personalnummer der Bedienungsperson.

Die Datenein- und -ausgabeeinheit kann mittels eines Tragarmes an dem Grundgestell verstellbar gelagert sein, so daß sie in eine für die jeweilige Bedienungsperson bequeme Arbeitsstellung gebracht werden kann. Die Datenein- und -ausgabeeinheit umfaßt vorzugsweise ein Datensichtgerät zur Anzeige des Betriebszustandes und der Betriebsparameter der Bolzenschweißvorrichtung, zur Anzeige von Anweisungen an das Bedienungspersonal und zur Anzeige des jeweiligen NC-Programmes. Ein Tastenfeld ermöglicht die Eingabe alphanumerischer Daten.

Weitere Merkmale und Vorteile der Erfindung ergeben sich aus der folgenden Beschreibung, welche in Verbindung mit den beiliegenden Figuren die Erfindung anhand von Ausführungsbeispielen erläutert. Es zeigen:

Fig. 1    eine teilweise schematische Frontansicht einer ersten Ausführungsform der erfindungsgemäßen Bolzenschweißvorrichtung mit einem Schweißkopf;

Fig. 2    eine Seitenansicht der Bolzenschweißvorrichtung in Richtung des Pfeiles A in Fig. 1;

Fig. 3    eine der Fig. 1 entsprechende Ansicht einer zweiten Ausführungsform der Erfindung;

Fig. 4    eine der Fig. 2 entsprechende Ansicht der zweiten Ausführungsform der Erfindung;

Fig. 5    eine der Fig. 1 entsprechende Ansicht einer dritten Ausführungsform der Erfindung mit mehreren Schweißköpfen;

Fig. 6    eine der Fig. 2 entsprechende Ansicht der dritten Ausführungsform der Erfindung;

Fig. 7    eine Frontansicht eines Bedienungspultes für die erfindungsgemäße Bolzenschweißvorrichtung    und

Fig. 8    eine Seitenansicht des Bedienungspultes mit einem teilweise im Schnitt dargestellten Tragarm für das Bedienungspult.

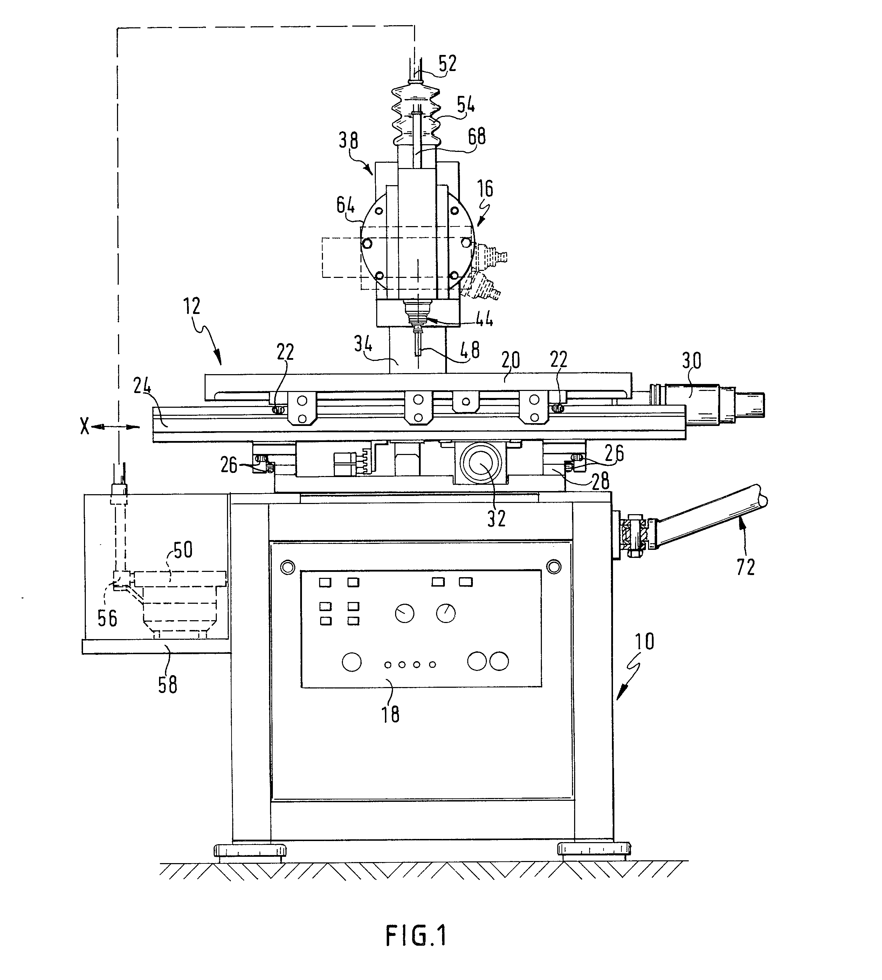

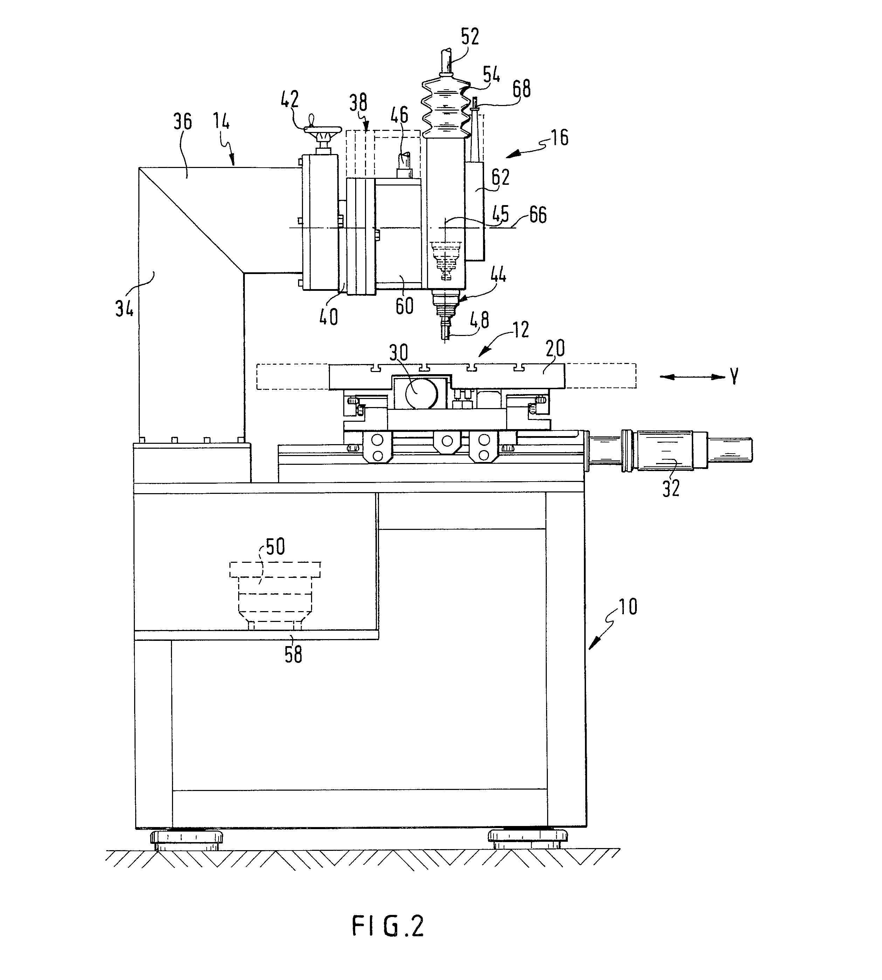

Gleiche Teile sind bei den verschiedenen Ausführungsformen jeweils mit gleichen Bezugszeichen versehen und werden nur einmal anhand der Figuren 1 und 2 beschrieben.

Die in den Fig. 1 und 2 dargestellte Bolzenschweißvorrichtung umfaßt ein Grund- oder Untergestell 10, auf dem ein allgemein mit 12 bezeichneter Werkstückaufnahmetisch gelagert ist. Oberhalb des Werkstückaufnahmetisches 12 befindet sich an einer grundgestellfesten Trägeranordnung 14 eine Schweißkopfanordnung 16.

Das Untergestell 10 schließt in herkömmlicher Weise eine Schweißstromquelle ein, von der lediglich eine Schalttafel 18 mit Anzeige- und Bedienungselementen zu erkennen ist.

Der Werkstückaufnahmetisch 12 umfaßt eine Werkstückaufspannplatte 20, die über bei 22 angedeutete Kugellager auf einem Schlitten 24 in Richtung des Doppelpfeiles X in Fig. 1 verschiebbar geführt ist. Der Schlitten 24 seinerseits ist über bei 26 angedeutete Kugellager auf einem grundgestellfesten Rahmen 28 in Richtung des Doppelpfeiles Y in Fig. 2 verschiebbar geführt. Bei dem Werkstückaufnahmetisch handelt es sich somit um einen an sich bekannten Koordinatentisch, der in x- und y-Richtung verstellbar ist. Die Verstellung erfolgt mit Hilfe zweier Stellantriebe 30 und 32, die über nicht dargestellte Spindeln die Aufspannplatte 20 relativ zum Schlitten 24 bzw. den Schlitten 24 relativ zum Rahmen 28 verstellen. Die Stellantriebe 30 und 32 werden numerisch gesteuert mittels einer Steuerung, die später noch genauer beschrieben wird.

Die Trägeranordnung 14 umfaßt eine vertikale Stütze 34, die auf dem Grundgestell 10 befestigt ist, und einen an dem oberen Ende der Stütze 34 ansetzenden waagerechten Arm 36. An dem freien Ende des waagerechten Armes 36 ist eine Halterung 38 mittels einer Schlittenführung 40 vertikal verstellbar geführt. Die Verstellung erfolgt über eine nicht dargestellte Stellspindel, die mittels einer Handkurbel 42 angetrieben wird.

Im vorderen Teil der Halterung 38 ist ein Schweißkopf 44 in Richtung der bei 45 angedeuteten Achse verstellbar geführt. Die Verstellung erfolgt in herkömmlicher Weise über einen nicht dargestellten doppelt wirkenden pneumatischen Arbeitszylinder, der in der Halterung 38 untergebracht ist und über einen Druckluftanschluß 46 mit einer nicht dargestellten Druckluftquelle verbunden ist, die beispielsweise in dem Grundgestell 10 eingeschlossen ist.

Der Schweißkopf 44 ist für Bolzen eines bestimmten Durchmessers ausgelegt und enthält eine nicht dargestellte Spannzange, welche den durch die Kopföffnung austretenden Bolzen 48 während des Schweißvorganges festhält. Die Bolzen 48 werden von einem Vorratsbehälter 50 her über eine Leitung 52 von oben in den Schweißkopf 44 eingeführt. Die Leitung 52 ist über einen Balgen 54 mit dem Schweißkopf 44 verbunden. Der Vorratsbehälter 50 ist von einem Vibrationsförderer oder Rütteltopf gebildet, in dem die Bolzen 48 ausgerichtet und dann einem Vereinzeler 56 zugeführt werden. Von dem Vereinzeler 56 werden sie auf ein Signal der numerischen Steuerung hin mittels Druckluft zum Schweißkopf 44 befördert.

- 9 -

Der Vorratsbehälter 50 ist bei dem Ausführungsbeispiel gemäß den Fig. 1 und 2 in einem seitlich am Grundgestell 10 befestigten Kasten 58 untergebracht. Sofern es der Platz zuläßt, könnte der Vorratsbehälter auch innerhalb des Grundgestells 10 angeordnet sein. Die Leitung 50 und ihr Anschluß am oberen Ende der Schweißkopfhalterung sind lediglich schematisch dargestellt. Die Leitung 50 könnte beispielsweise auch innerhalb der Stütze 34 und des Armes 36 verlaufen.

Bei der in den Fig. 1 und 2 dargestellten Ausführungsform umfaßt die Halterung 38 ein erstes mit der Schlittenführung 40 verbundenes Teil 60 und ein zweites den Schweißkopf 44 aufnehmendes Teil 62, die beide über eine Rasterscheibe 64 so miteinander verbunden sind, daß durch Umsetzen der Rasterscheibe 64 der Schweißkopf 44 um eine horizontale Achse 66 gedreht werden kann. In Fig. 1 sind eine um 90$^0$ gedrehte Stellung und eine Zwischenstellung des Schweißkopfes jeweils durch gestrichelte Linien angedeutet. Die Bolzenzufuhr zum Schweißkopf 44 wird durch dessen Drehung um die Achse 66 nicht beeinträchtigt. Diese Verstellbarkeit des Schweißkopfes 44 ermöglicht es, auch Bolzen an Werkstückflächen anzuschweißen, die nicht parallel zur Oberfläche des Aufspanntisches 20 gerichtet sind.

Die elektrische Verbindung des Schweißkopfes 44 mit der Schweißstromquelle erfolgt über einen Anschluß 68.

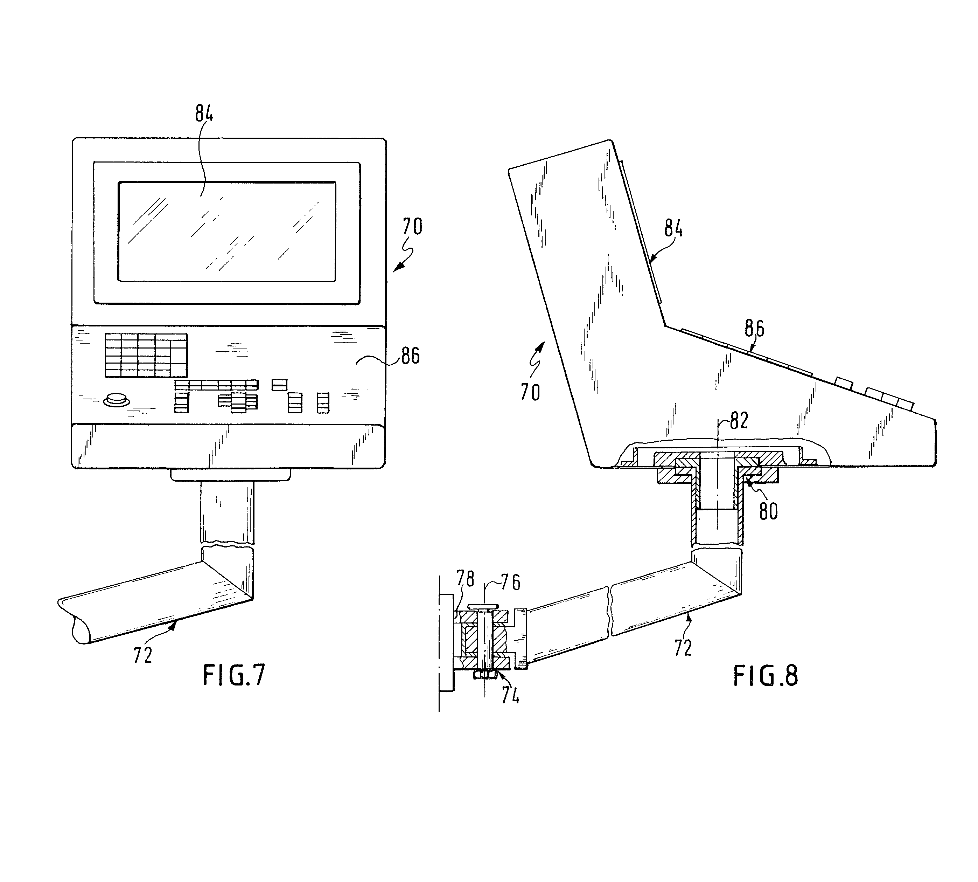

Die numerische Steuerung für die Stellantriebe 30 und 32 umfaßt einen Steuerrechner und eine Programmeingabeeinheit sowie Steuerelektroniken für die Stellantriebe. Alle diese Einheiten sind in dem Grundgestell 10 untergebracht und in den Figuren nicht dargestellt. Die Programmeingabeeinheit kann von einem Magnetplattenspeicher oder aber auch von Streifenlesern, Bandspeichern und dgl. gebildet sein. Mit den in dem Grundgestell 10 untergebrachten Teilen der numerischen Steuerung ist ein in den Fig. 7 und 8 dargestelltes Bedienungspult 70 verbunden, das mittels eines Tragarmes 72 an dem Grundgestell 10 verstellbar gelagert ist. Der Tragarm 72 ist mittels eines Gelenkes 74 um eine vertikale Achse 76 an einer Lagergabel 78 schwenkbar angelenkt, die an der in der Fig. 1 rechten Seite des Grundgestelles 10 befestigt ist. An dem anderen Ende des in Form eines Winkelrohrs ausgebildeten Tragarms 72 ist das Bedienungspult 70 über ein Gelenk 80 um eine vertikale Achse 82 drehbar gelagert. Gegebenenfalls kann das Gelenk 80 auch als Kugelgelenk ausgebildet sein, so daß das Bedienungspult 70 auch gegenüber der horizontalen Ebene in eine beliebige Richtung geneigt werden kann. Diese Lagerung des Bedienungspultes ermöglicht eine ergonomisch günstige Anordnung des Bedienungspultes für die die Bolzenschweißvorrichtung bedienende Person.

Das Bedienungspult 70 umfaßt ein Datensichtgerät mit einem Bildschirm 84 zur alphanumerischen Darstellung des Betriebszustandes der Maschine, zur Darstellung von Anweisungen für die Bedienungsperson und zur Anzeige des jeweiligen Programmes für die numerische Steuerung. Die Anweisungen auf dem Bildschirm 84 können beispielsweise auch in Fremdsprachen gegeben werden. Unterhalb des Bildschirmes 84 befindet sich ein Tastenfeld 86 mit Bedienungstasten zur Programmierung des Steuerrechners, zur Eingabe von Bedienungsdaten und zur Auswahl der gewünschten Programme. Das Bedienungspult 70 kann dabei im Prinzip universell an allen Werkzeugmaschinentypen verwendet werden, da die Tasten frei programmierbar sind.

Die soweit beschriebene Bolzenschweißvorrichtung arbeitet folgendermaßen: Ein mit Bolzen zu versehendes Werkstück wird auf den Aufspanntisch 20 aufgespannt. Abhängig von der Länge der aufzuschweißenden Bolzen wird dann die Halterung 38 mittels der Handkurbel 42 so eingestellt, daß ein bestimmter gleichbleibender Abstand zwischen dem unteren Bolzenende und dem Werkstück eingehalten wird. Die vertikale Verstellmöglichkeit der Halterung 38 zusammen mit dem Schweißkopf 44 ist in Fig. 2 durch gestrichelte Linien angedeutet. Danach wird an dem Bedienungspult das gewünschte Programm gewählt. Durch dieses Programm werden die Schweißparameter der Schweißstromquelle wie etwa die Stromstärke und die Schweißzeit festgelegt. In Abhängigkeit des Programmes wird nun die Werkstückaufspannplatte 20 mittels der Stellantriebe 30 und 32 von Position zu Position relativ zum Schweißkopf 44 verstellt und in jeder Position der Schweißkopf 44 mittels des nicht dargestellten pneumatischen Arbeitszylinders in Richtung der Achse 62 verstellt und der Bolzen in bekannter Weise angeschweißt. Während der Schweißkopf 44 zurückgezogen und ein neuer Bolzen 48 zugeführt wird, wird die Werkstückaufspannplatte 20 in die nächste Position verfahren. Wird ein Werkstück mit anderen Positionen für die aufzuschweißenden Bolzen aufgespannt oder werden andere Bolzen verwendet, so braucht lediglich ein anderes Programm gewählt zu werden. Mit Ausnahme der manuellen Einstellung der Halterung 38 relativ zum Werkstückaufnahmetisch 12 braucht die Bedienungsperson keine weiteren Einstellmaßnahmen vorzunehmen.

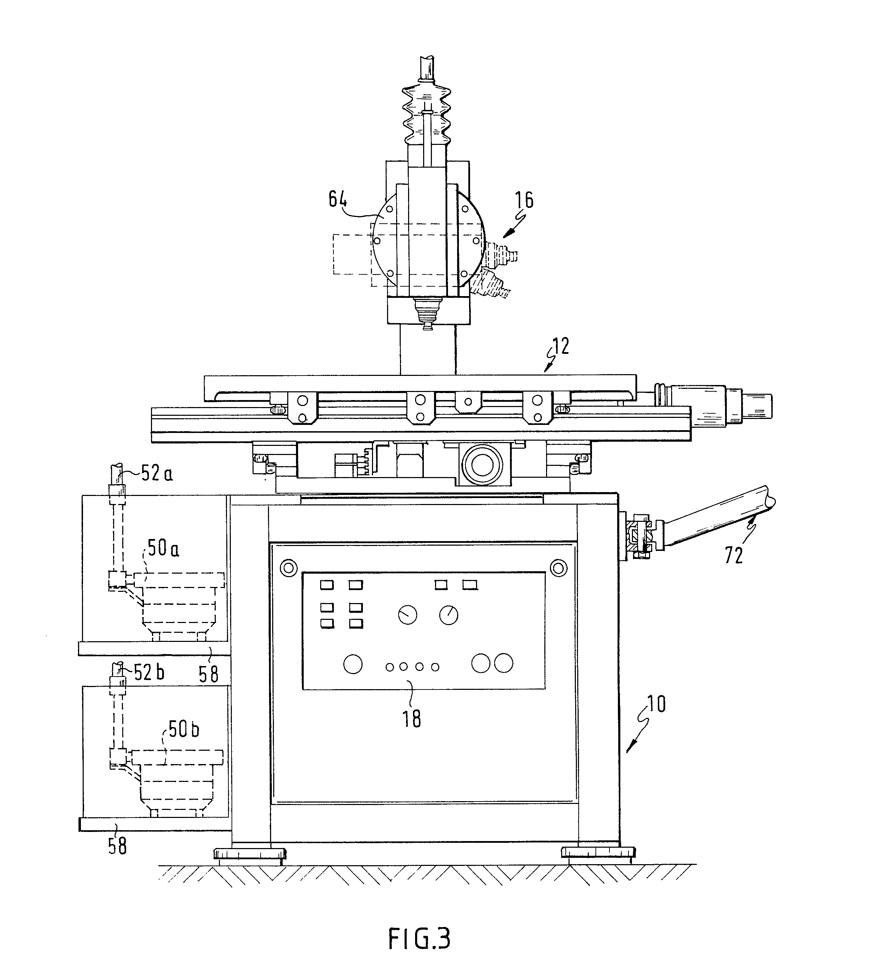

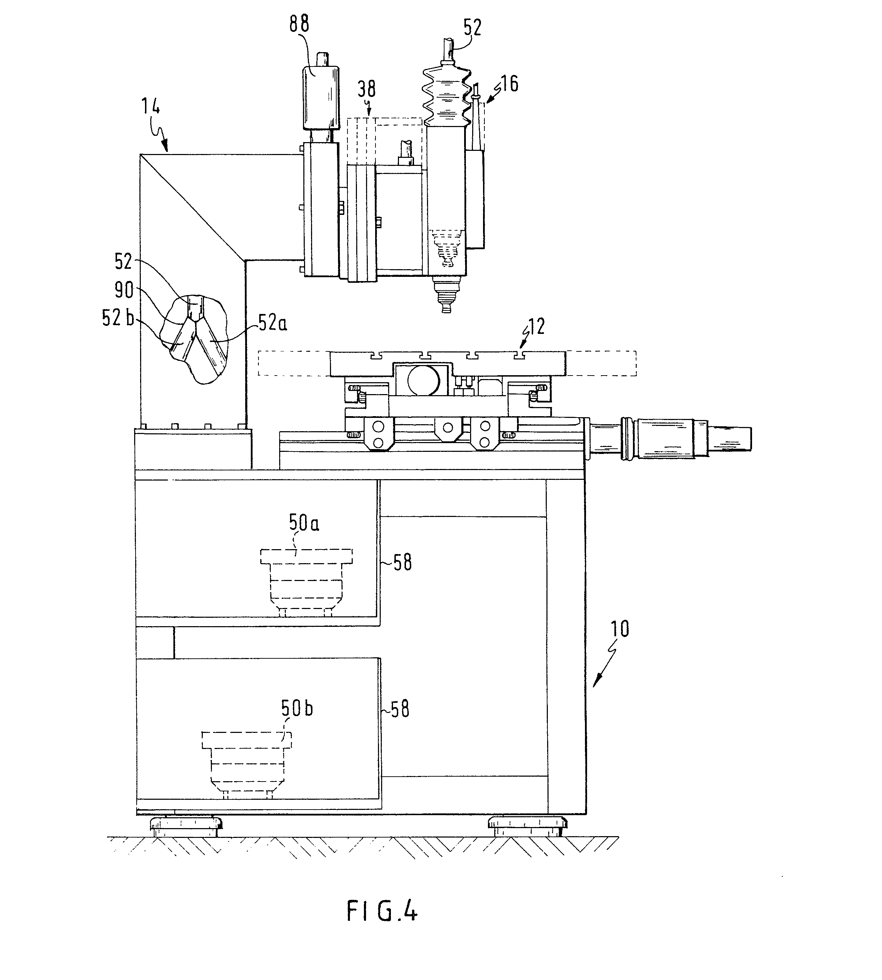

Die Ausführungsform gemäß den Fig. 3 und 4 unterscheidet sich von der in den Fig. 1 und 2 dargestellten Ausführungsform lediglich dadurch, daß anstelle der Handkurbel 42 zur Verstellung der Halterung 38 gegenüber dem Arm 36 ein Stellantrieb 88 vorgesehen ist, der ebenfalls an die numerische Steuerung angeschlossen ist. Somit kann also auch das Einrichten der Maschine, d.h., die Verstellung der Halterung 38 in z-Richtung, d.h., senkrecht zum Werkstückaufnahmetisch 12 gemäß dem eingestellten Programm erfolgen.

Eine weitere Abweichung gegenüber der in den Fig. 1 und 2 dargestellten Ausführungsform besteht darin, daß zwei Vorratsbehälter 50a und 50b für zwei verschiedene Bolzenarten vorgesehen sind. Die Vorratsbehälter 50a und 50b sind über Anschlußleitungen 52a bzw. 52b an eine Schlauchweiche 90 angeschlossen, von welcher die gemeinsame Leitung 52 zum Schweißkopf 44 führt. Da ein Schweißkopf jeweils nur für einen Bolzendurchmesser geeignet ist, müssen die in den Vorratsbehältern 52a und 52b enthaltenen Bolzen denselben Durchmesser besitzen.

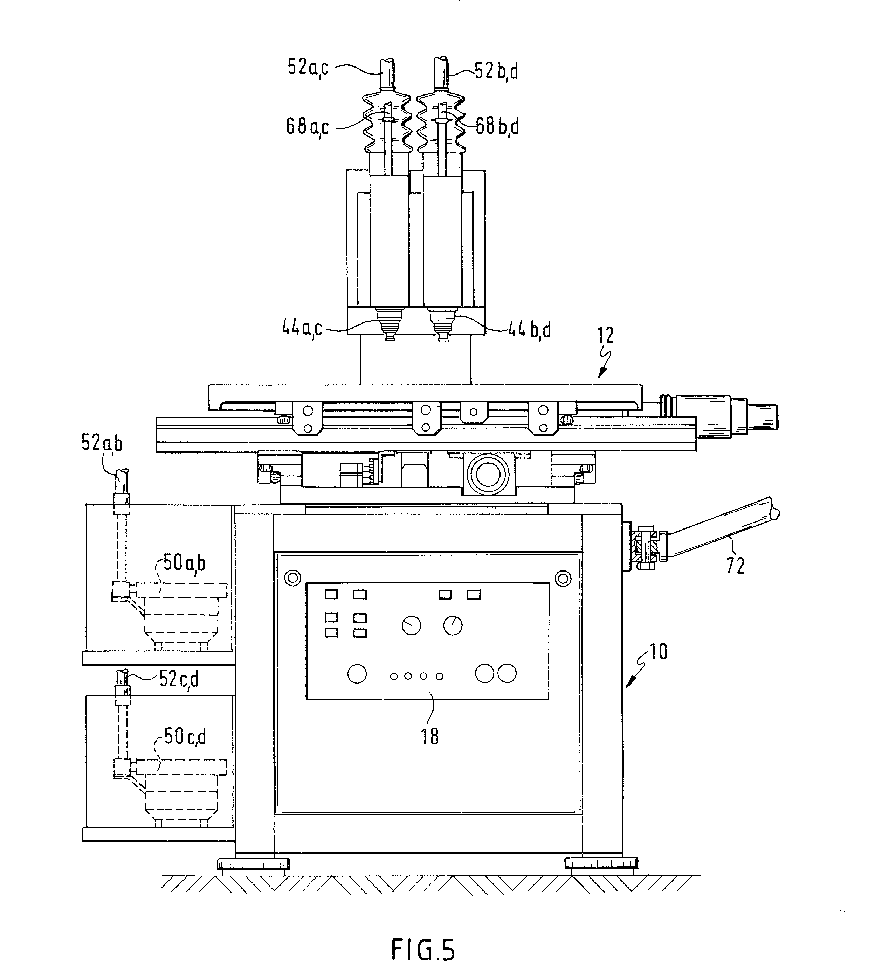

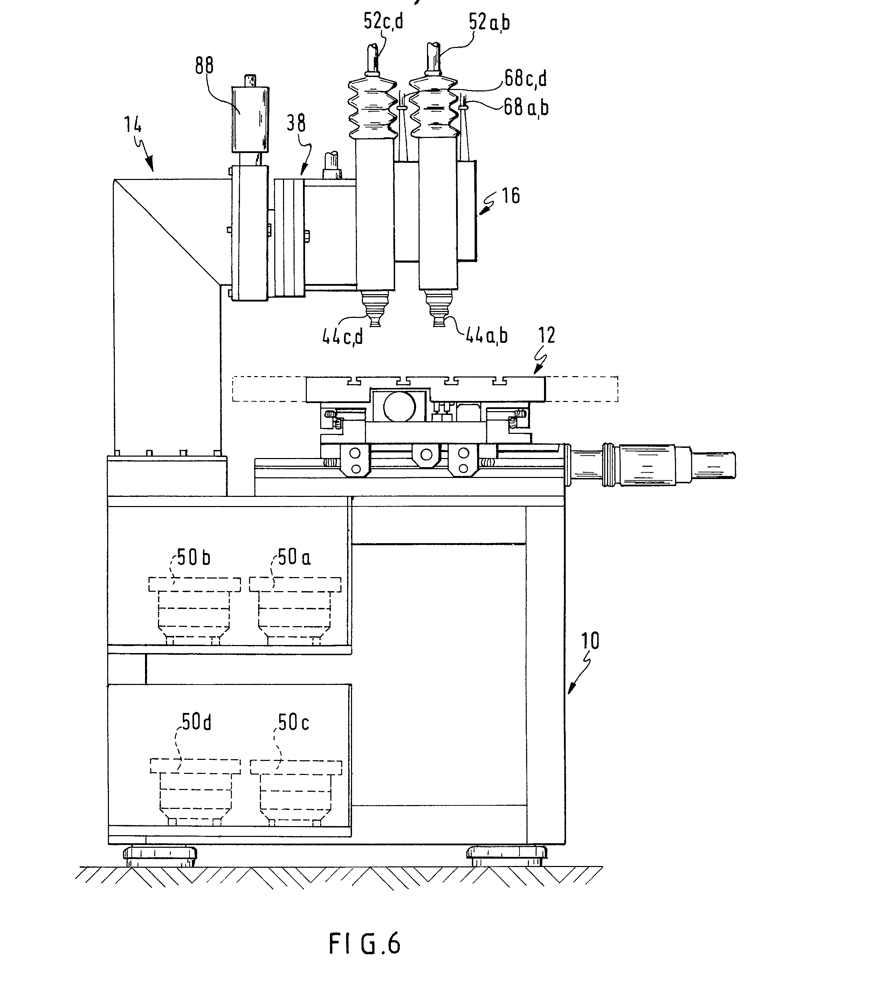

Die in den Fig. 5 und 6 dargestellte Ausführungsform der Bolzenschweißvorrichtung umfaßt vier Schweißköpfe 44a; 44b; 44c und 44d, die jeweils über eine Leitung 52a bis 52d mit einem Vorratsbehälter 50a bis 50d verbunden sind. Die Vorratsbehälter 50a bis 50d sind wie bei den in den Fig. 1 bis 4 dargestellten Ausführungsformen jeweils entweder in dem Grundgestell 10 untergebracht oder in Kästen 58 angeordnet. Die elektrische Verbindung der Schweißköpfe 44a bis 44d mit der nicht dargestellten Schweißstromquelle erfolgt über Anschlüsse 68a bis 68d. Die Schweißköpfe 44 sind an der Halterung 38 so angeordnet, daß sie unabhängig voneinander oder auch gemeinsam in z-Richtung verstellt werden können. Die Verstellung der Halterung 38 gegenüber dem Arm 36 für eine gemeinsame Verstellung der Schweißköpfe 44a bis 44d kann wiederum wie bei der in den Fig. 3 und 4 dargestellten Ausführungsform mit Hilfe eines Stellantriebes erfolgen. Bei einer Einzelverstellung muß jedem Schweißkopf eine unabhängig verstellbare Halterung und ein dazugehöriger Stellantrieb zugeordnet sein.

Gerade bei der in den Fig. 5 und 6 dargestellten Ausführungsform der Bolzenschweißvorrichtung zeigen sich die Vorteile der numerischen Steuerung der Betriebsparameter besonders deutlich. Mit Hilfe dieser Steuerung können nun Bolzen mit unterschiedlicher Länge und/oder unterschiedlichem Durchmesser entsprechend dem gewählten Programm ohne Betriebsunterbrechung an dem Werkstück befestigt werden. Die Einstellung der Position des Werkstückes relativ zu dem jeweils gewählten Schweißkopf, die Wahl der für den jeweiligen Bolzen geeigneten Schweißstromparameter und die richtige Einstellung des gewählten Schweißkopfes relativ zum Werkstück erfolgt trotz der Komplexität der Vorgänge und der vielfältigen Einstellmaßnahmen rasch und präzise. Die manuelle Bedienung einer derartigen Bolzenschweißvorrichtung würde einen erheblichen materiellen und zeitlichen Aufwand erfordern, der durch die numerische Steuerung eingespart werden kann.

Patentansprüche

1. Bolzenschweißvorrichtung, umfassend ein Grundgestell (10), einen auf dem Grundgestell in zwei zueinander senkrechten Richtungen verstellbaren Werkstückaufnahmetisch (12), einen an einer grundgestellfesten Trägeranordnung (14) relativ zum Werkstückaufnahmetisch (12) verstellbaren Schweißkopf (44) mit
einer Vorrichtung zur Aufnahme und elektrisch leitenden Halterung des jeweils anzuschweißenden Bolzens (48) und eine mit dem Schweißkopf (44) leitend
verbindbare Schweißstromquelle zur Zufuhr eines
Schweißstromes zum Schweißkopf, dadurch gekennzeichnet, daß mindestens ein Teil der Betriebsparameter
und/oder Arbeitsschritte der Bolzenschweißvorrichtung
numerisch gesteuert ist.

2. Bolzenschweißvorrichtung nach Anspruch 1, dadurch gekennzeichnet, daß der Werkstückaufnahmetisch (12)
mittels numerisch gesteuerter Stellantriebe (30; 32)
relativ zum Schweißkopf (44) verstellbar ist.

3. Bolzenschweißvorrichtung nach Anspruch 1 oder 2,
dadurch gekennzeichnet, daß die Schweißparameter der
Schweißstromquelle numerisch einstellbar sind.

4. Bolzenschweißvorrichtung nach einem der Ansprüche 1
bis 3, dadurch gekennzeichnet, daß der Schweißkopf
(44) an einer Halterung (38) verstellbar geführt ist,
die ihrerseits an einem grundgestellfesten Trägerarm (34; 36) der Trägeranordnung (14) senkrecht zum
Werkstückaufnahmetisch (12) verstellbar ist.

5. Bolzenschweißvorrichtung nach Anspruch 4, dadurch gekennzeichnet, daß die Halterung (38) an dem Trägerarm (34; 36) mittels einer manuell betätigbaren Stellvorrichtung (42) verstellbar ist.

6. Bolzenschweißvorrichtung nach Anspruch 4, dadurch gekennzeichnet, daß die Halterung (38) an dem Trägerarm (34; 36) mittels eines numerisch gesteuerten Stellantriebes (88) verstellbar ist.

7. Bolzenschweißvorrichtung nach einem der Ansprüche 4 bis 6, dadurch gekennzeichnet, daß die Halterung (38) einen mit dem Trägerarm verbundenen ersten Teil (60) und einen den Schweißkopf (44) tragenden zweiten Teil (62) aufweist und daß der zweite Teil (62) an dem ersten Teil (60) um eine senkrecht zur Verstellrichtung des Schweißkopfes (44) gerichtete Achse (66) drehbar gelagert ist und daß vorzugsweise Mittel (64) zum Arretieren des zweiten Teiles (62) in einer eingestellten Drehstellung relativ zum ersten Teil (60) vorgesehen sind.

8. Bolzenschweißvorrichtung nach einem der Ansprüche 1 bis 7, dadurch gekennzeichnet, daß an der Trägeranordnung eine Mehrzahl von Schweißköpfen (44a bis 44d), vorzugsweise unabhängig voneinander verstellbar geführt ist und vorzugsweise unabhängig voneinander mit der Schweißstromquelle verbindbar sind und daß vorzugsweise jeder Schweißkopf (44a bis 44d) mit mindestens einem Bolzenvorratsbehälter (50a bis 50d) und einer Bolzenzuführeinrichtung verbunden ist.

0037918

9. Bolzenschweißvorrichtung nach einem der Ansprüche 1 bis 8, dadurch gekennzeichnet, daß eine Steuereinheit zur numerischen Steuerung der Stellantriebe (30; 32; 88) und/oder der Schweißparameter vorge- sehen ist und daß vorzugsweise die Steuereinheit eine elektronische Datenverarbeitungseinheit und eine mit dieser verbundene Datenein- und -ausgabeeinheit (70) umfaßt, die einen Steuerrechner und eine Programmeingabeeinheit aufweist.

10. Bolzenschweißvorrichtung nach Anspruch 9, dadurch gekennzeichnet, daß die Datenein- und -ausgabe- einheit (70) mittels eines Tragarmes (72) an dem Grundgestell (10) verstellbar gelagert ist und daß vorzugsweise das Bedienungspult (70) ein Datensichtgerät (84) und ein Tastenfeld (86) umfaßt.

FIG.1

FIG.2

FIG.3

FIG.4

FIG.5

FIG.6

FIG.7

FIG.8

- 7/7 -

0037918